# EUROPEAN PATENT SPECIFICATION

(11) **EP 1 966 846 B1**
(45) Date of publication and mention of the grant of the patent: **12.01.2011**
(21) Application number: 06820945.1
(22) Date of filing: 22.11.2006
(51) Int. Cl.: H01M 8/04

(54) **FUEL CELL SYSTEM, MOVING OBJECT EQUIPPED WITH FUEL CELL SYSTEM, AND ABNORMALITY JUDGMENT METHOD FOR FUEL CELL SYSTEM**
BRENNSTOFFZELLENSYSTEM, MIT BRENNSTOFFZELLENSYSTEM AUSGESTATTETES BEWEGLICHES OBJEKT UND ABNORMITÄTSBEURTEILUNGSVERFAHREN FÜR EIN BRENNSTOFFZELLENSYSTEM
DISPOSITIF DE PILE A COMBUSTIBLE, OBJET EN MOUVEMENT EQUIPE DISPOSITIF DE PILE A COMBUSTIBLE ET PROCEDE D'APPRECIATION D'ANORMALITE POUR DISPOSITIF DE PILE A COMBUSTIBLE

(30) Priority: 16.12.2005 JP 2005363264
(43) Date of publication of application: 10.09.2008
(73) Proprietor: Toyota Jidosha Kabushiki Kaisha, Toyota-shi, Aichi-ken, 471-8571 (JP)
(72) Inventor: HASUKA, Yoshinobu, c/o Toyota Jidosha Kabushiki Kaisha, Toyota-shi, Aichi-ken 471-8571 (JP); SHIBUI, Hiroyuki, c/o Toyota Jidosha Kabushiki Kaisha, Toyota-shi, Aichi-ken 471-8571 (JP); ISHIKAWA, Norimasa, c/o Toyota Jidosha Kabushiki Kaisha, Toyota-shi, Aichi-ken 471-8571 (JP)
(74) Representative: Kuhnen & Wacker
(86) International application number: PCT/IB2006/003304
(87) International publication number: WO 2007/069010

(56) References cited:
- WO-A-2005/060036
- DE-A1-102005 047 972
- US-A1- 2004 161 644

## Description

### BACKGROUND OF THE INVENTION

### 1. Field of the Invention

The present invention relates to a fuel cell system which incorporates an injector in its gas supply system, to a moving object equipped with such a fuel cell system, and to abnormality determination method for such a fuel cell system.

### 2. Description of the Related Art

Nowadays, fuel cell systems incorporating fuel cells which perform generation of electricity by receiving supply of reaction gases (fuel gas and oxidant gas) are being proposed and put into practice. In such a fuel cell system, there is included a fuel supply flow passage which supplies fuel gas from a fuel supply source such as a hydrogen tank or the like into the fuel cell.

And, generally, when the pressure at which fuel gas is supplied from a fuel supply source (for example, a high pressure gas tank at 70 MPa) is extremely high, a pressure regulation valve (a regulator) which reduces this supply pressure down to a constant value is provided in the fuel supply flow passage (for example refer to Japanese Patent Application Publication No. JP-A-2004-342386).

However, with the pressure regulation valve described in that Japanese Patent Application Publication No. JP-A-2004-342386, with that structure, since the supply pressure of the fuel gas is constant, it is difficult to change the supply pressure of the fuel gas rapidly according to the driving situation (in other words, the responsiveness is low). Moreover, it is not possible to perform highly accurate pressure regulation, such as making the target pressure change through many stages.

Furthermore, with a fuel supply flow passage which is provided to a fuel supply source whose supply pressure is high; it is very important to detect any abnormality in this fuel supply system, and, as method for detecting such abnormalities, there is pressure regulator fault detection method by pressure drop and the like. However, with this detection method, it is necessary to close the pressure regulation valve, to close off the system, and to stabilize the pressure with the system. Due to this, abnormality detection while the fuel cell is generating electricity becomes difficult, or such abnormality detection may take a long time period, which is undesirable.

For this reason, there is a demand for a system which can change the supply pressure of the fuel gas in an appropriate manner according to the operational state of the fuel cell, and with which, moreover, it is possible rapidly to perform abnormality detection for the gas supply system, even while the fuel cell is generating electricity.

### SUMMARY OF THE INVENTION

The object of the present invention is to provide a technique with which it is possible to change the supply pressure of the reaction gases in an appropriate manner according to the operational state of the fuel cell, and with which, moreover, it is possible to perform abnormality detection for the gas supply system in a simple manner, even while the fuel cell is generating electricity.

A first aspect of the present invention relates to a fuel cell system which includes a fuel cell, an injector which is provided in a gas supply system for supplying reaction gas to the fuel cell and which adjusts the state of the reaction gas at the upstream side of this gas supply system and supplies the adjusted reaction gas to its downstream side, and control means for controlling the injector according to the operational state of the fuel cell. This fuel cell system includes control means adapted to, during operation of the feel cell, detect the presence of an abnormality in the gas supply system, based on a target operational amount for the injector, and a physical quantity detected in the gas supply system.

According to this first aspect of the present invention, it is possible to set the operational state of the injector (the opening amount of the valve of the injector (its gas passage area), the opening time of the valve of the injector (the injection time of the gas), and so on) according to the operational state of the fuel cell (the amount of electricity generated by the fuel cell (its electrical power, electrical current, and voltage), the temperature of the fuel cell, the abnormality state of the fuel cell system, the abnormality state of the fuel cell main body, and so on). Accordingly, it is possible to vary the supply pressure of the fuel gas in an appropriate manner according to the operational state of the fuel cell, and it becomes possible to enhance its responsiveness.

Furthermore, the control means the presence of an abnormality in the gas supply system, based on the target operational amount for the injector (for example, a target opening amount, a target valve opening time period, a target pressure, a target flow amount, a target injection amount, or a target injection time period) and the detected physical quantity of the gas supply system (for example, a detected pressure, a detected temperature, a detected flow amount, or an amount of change of these). Due to this, it is possible to perform rapid detection of an abnormality in the gas supply system, even while the fuel cell is generating electricity.

In this fuel cell system, there may be further included pressure detection means for detecting a pressure within the gas supply system. Furthermore, it would also be acceptable to arrange for the control means adapted to detect, during operation of the fuel cell, the presence of an abnormality in the gas supply system, based on the target injection amount for the injector, and the pressure which has been detected in the gas supply system.

It should be understood that by the state of the reaction gas is meant the flow amount, the pressure, the temperature, the molar density, and/or the like of the reaction gas, and in particular it includes at least one of its flow amount and its pressure.

When this structure is employed, the control means actually measures the pressure at the downstream side of the injector, based on the detection result from the pressure detection means. By doing this, it is possible accurately to detect the presence of an abnormality in the gas supply system, based upon the actual measurement value of this pressure change and the target injection amount for the injector.

Moreover, in this fuel cell system, the control means may be equipped with a correction function of correcting the target injection amount for the injector, based on the difference between an estimated pressure which has been obtained from the target injection amount for the injector, and the pressure which has been detected in the gas supply system.

When this structure is employed, it is possible to perform more accurate abnormality detection for the gas supply system, irrespective of individual differences between injectors or the pressure detection means or the like, or of changes thereof due to the passage of time.

Furthermore, in this fuel cell system, the gas supply system may be a hydrogen gas supply system which supplies hydrogen to the fuel cell.

When this structure is employed, it is possible to detect an abnormality in the hydrogen gas supply system due to a gas leak from the pipes, a valve fault, an injector fault or the like during the generation of electricity by the fuel cell in a short time period, and it is possible to deal with this abnormality rapidly, thus maintaining a satisfactory state of electricity generation by the fuel cell.

Furthermore, in this fuel cell system, the control means may detect, during operation of the fuel cell, the presence of an abnormality of the injector, based on whether an actual measurement value of the pressure which is detected at the downstream side of the injector is within a normal pressure range for the reaction gas supplied by the injector.

When this structure is employed, it is possible to detect an operational fault of the injector such as a valve open abnormality (an open fault), a valve closed abnormality (a closed fault), or the like during the generation of electricity by the fuel cell in a short time period, and it is possible to deal with this abnormality rapidly, thus maintaining a satisfactory state of electricity generation by the fuel cell.

Furthermore, in this fuel cell system, the control means may detect, during operation of the fuel cell, the presence of an abnormality of the gas supply system, based on the difference between the gas consumption amount in the gas supply system and the actual injection amount by the injector.

Moreover, the gas consumption amount may include at least one of an error in the injection command amount to the injector, an error in detection of the electrical current being produced by the fuel cell, and the increase amount of the cross leakage for the fuel cell; and the control means may detect, during operation of the fuel cell, the presence of a gas leak, based on the gas consumption amount and the actual injection amount of the reaction gas by the injector.

According to this structure, it is possible to set the operational state of the injector (the opening amount of the valve of the injector (its gas passage area), the opening time period of the valve of the injector (its gas injection time period) and the like) according to the operational state of the fuel cell (the amount of electricity generation by the fuel cell (the electrical power, the electrical current, and the voltage), the temperature of the fuel cell, the abnormality state of the fuel cell system, the abnormality state of the fuel cell main body, and so on). Accordingly, it is possible to change the supply pressure of the fuel gas in an appropriate manner according to the operational state of the fuel cell, so that it becomes possible to enhance the responsiveness.

Furthermore, the control means may detect, during operation of the fuel cell, the presence of an abnormality in the gas supply system from the difference between the gas consumption amount by the gas supply system (for example, the gas consumption amount due to generation of electricity by the fuel cell) and the injection amount from the injector. Due to this, it is possible to perform rapid abnormality detection for the gas supply system, even during generation of electricity by the fuel cell. While the gas consumption amount by the gas supply system is the consumption amount of fuel gas due to, for example, generation of electricity by the fuel cell, it may also include an amount of cross leakage of fuel gas within the fuel cell from an anode to a cathode, an amount of fuel gas which is emitted during purging fuel OFF gas which is discharged from the fuel cell to the outside, and so on.

In this fuel cell system, the judgment means may judge an abnormality in the hydrogen gas supply system.

When this structure is employed, it is possible to detect an abnormality in the hydrogen gas supply system due to a gas leak from the pipes, a valve fault, an injector fault or the like during the generation of electricity by the fuel cell within a short time period, and it is possible to deal with this abnormality in a rapid manner, while maintaining a satisfactory state of electricity generation by the fuel cell.

A second aspect of the present invention relates to a moving object. This moving object includes such a fuel cell system.

According to this type of structure, with a moving object in which is mounted a fuel cell system whose responsiveness to changes of the supply pressure of the fuel gas according to the operational state of the fuel cell is high, it is possible rapidly to perform abnormality detection for the gas supply system during generation of electricity by the fuel cell.

A third aspect of the present invention relates to abnormality determination method for a fuel cell comprised in a fuel cell system, the fuel cell system further including an injector and control means for controlling said injector wherein said injector is provided in a gas supply system for supplying reaction gas to the fuel cell, said injector is controlled to adjust the state of the reaction gas at the upstream side of this gas supply system and to supply the adjusted reaction gas to its downstream side, according to the operational state of the fuel cell. This method includes a step of calculating a target operational amount for the injector, a step of detecting a physical quantity within the gas supply system, and a step of detecting the presence of an abnormality in the gas supply system, based on the target operational amount and the physical quantity.

According to the present invention, it becomes possible to perform abnormality detection for the gas supply system rapidly, even during electricity generation by the fuel cell.

### DETAILED DESCRIPTION OF THE PREFERRED EMBODIMENTS

The foregoing and further objects, features and advantages of the invention will become apparent from the following description of preferred embodiments with reference to the accompanying drawings, wherein like numerals are used to represent like elements and wherein:
Fig. 1 is a structural diagram of a fuel cell system according to a first embodiment of the present invention;
Fig. 2 is a control block diagram for explanation of the layout of the control device shown in Fig. 1;
Fig. 3 is a flow chart for explanation of abnormality detection processing by the control device shown in Fig. 1;
Fig. 4a is a graph showing a target injection amount Q, Fig. 4b is a graph showing an injector amount accumulated value V, Fig. 4c is a graph showing a pressure increase ΔP, and Fig. 4d is a graph showing a range Ps of an estimated pressure P;
Fig. 5a is a graph showing an actual measurement value Pr of a secondary side pressure during an open fault, Fig. 5b is a graph showing the actual measurement value Pr of the secondary side pressure during a closed fault, and Fig. 5c is a graph showing the actual measurement value Pr of the secondary side pressure during normal times;
Fig. 6 is a graph for explanation of a method of gas leak detection by the control device shown in Fig. 1;
Fig. 7 is a graph for explanation of the setting of a threshold value which is used in this gas leak detection; and
Fig. 8 is a graph for explanation of another example of a gas leak detection method.

### DETAILED DESCRIPTION OF THE PREFERRED EMBODIMENTS

In the following, a first embodiment of the present invention will be explained with reference to the drawings. In this embodiment, it will be supposed that the explanation relates to an example in which the present invention is applied to an onboard electricity generation system for a fuel cell vehicle (a moving object).

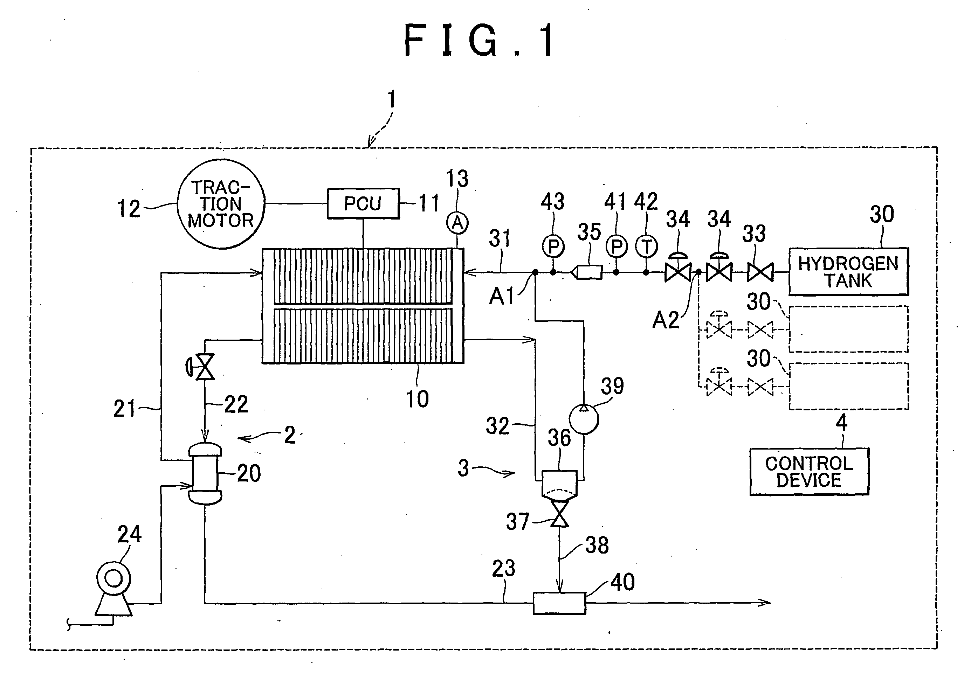

First, the structure of this fuel cell system 1 according to this embodiment of the present invention will be explained with reference to Fig. 1.

As shown in Fig. 1, this fuel cell system 1 comprises a fuel cell 10 which receives supply of reaction gases (oxidant gas and fuel gas) and generates electrical power. Furthermore, this fuel cell system 1 comprises: an oxidant gas pipework system 2 which supplies air, as oxidant gas, to the fuel cell 10; a hydrogen gas pipework system 3 which supplies hydrogen gas, as fuel gas, to the fuel cell 10; and a control device 4 (a control means) which performs integrated control of the system as a whole.

This fuel cell 10 has a stack structure in which the required number of individual cells which receive supply of reaction gases and generate electricity are stacked. The electrical power generated by the fuel cell 10 is supplied to a PCU (Power Control Unit) 11. This PCU 11 comprises an inverter disposed between the fuel cell 10 and a traction motor 12 and a DC-DC converter and the like. Furthermore, an electrical current sensor is fitted to the fuel cell 10 for detecting the electrical current which is being generated.

The oxidant gas pipework system 2 comprises: an air supply flow passage 21 which supplies oxidant gas (air) to the fuel cell 10 after it has been humidified by a humidifier 20; an air exhaust flow passage 22 which leads oxidized OFF gas which has been exhausted from the fuel cell 10 to the humidifier 20; and an exhaust flow passage 23 for leading the oxidized OFF gas from the humidifier 21 to the outside. In the air supply flow passage 21, there is provided a compressor 24 which takes in oxidant gas in the atmosphere and compresses it and sends it to the humidifier 20.

The hydrogen gas pipework system 3 comprises: a hydrogen tank 30, which constitutes a fuel supply source, and which stores hydrogen gas at high pressure; a hydrogen supply flow passage 31 which serves as a fuel supply flow passage for supplying hydrogen gas from the hydrogen tank 30 to the fuel cell 10; and a circulation flow passage 32 for returning hydrogen OFF gas which has been exhausted from the fuel cell 10 back to the hydrogen supply flow passage 31. This hydrogen gas pipework system 3 is the gas supply system in this first embodiment of the present invention.

It should be understood that, as a fuel supply source, instead of the hydrogen tank 30, it would also be possible to employ a reformer which generates hydrogen-rich reformed gas from a hydrocarbon type fuel, and a high pressure gas tank which stores this reformed gas generated by this reformer in a high pressure state. Furthermore, it would also be acceptable to arrange to employ a tank containing a hydrogen storage alloy as the fuel supply source.

In the hydrogen supply flow passage 31, there are provided an interception valve 33 which either intercepts or permits supply of hydrogen gas from the hydrogen tank 30, regulators 34 which adjust the pressure of this hydrogen gas, and an injector 35. Furthermore, at the upstream side of the injector 35, there are provided a primary side pressure sensor 41 and a temperature sensor 42 which detect the pressure and the temperature of the hydrogen gas in the hydrogen supply flow passage 31.

Furthermore, at the upstream side of the point at which the hydrogen supply flow passage 31 and the circulation flow passage 32 come together, and at the downstream side of the injector 35, there is provided a secondary side pressure sensor 43 which detects the pressure of the hydrogen gas in the hydrogen supply flow passage 31.

The regulators 34 are devices which regulate this upstream side pressure (the primary pressure) to a secondary pressure which is set in advance. In this embodiment, mechanical pressure reduction valves which reduce the primary pressure are employed as the regulators 34. As for the structure of these mechanical pressure reduction valves, a conventional structure may be employed, having a body which is formed with a back pressure chamber and a pressure regulation chamber separated from one another by a diaphragm. Moreover, the primary pressure within the pressure regulation chamber may be reduced to a predetermined pressure by the back pressure within the back pressure chamber, so as to create the secondary pressure.

As shown in Fig. 1, in this embodiment, by disposing two of the regulators 34 at the upstream side of the injector 35, it becomes possible effectively to reduce the pressure at the upstream side of the injector 35. Due to this, the freedom for design of the mechanical construction of the injector 35 (i.e. of the valve body, the body, the flow passage, the drive device and so on thereof) is enhanced.

Furthermore, it is possible to reduce the pressure on the upstream side of the injector 35. Due to this, it is possible to prevent any difficulty occurring in shifting of the valve body of the injector 35, which might be caused by increase of the pressure difference between the pressure at the upstream side of the injection 35 and the pressure at the downstream side thereof. Accordingly, along with it becoming possible to widen the pressure adjustment range for the pressure on the downstream side of the injector 35, it also becomes possible to suppress decrease of the responsiveness of the injector 35.

The injector 35 is an opening/closing valve of an electromagnetically driven type. In this injector 35, a valve body is directly driven by an electromagnetic driving force and is separated from a valve seat at a predetermined drive cycle. Due to this, it is possible to adjust the gas state, such as the gas flow amount and the gas pressure and so on. Along with the injector 35 comprises a valve seat which has an injection hole which injects gaseous fuel such as hydrogen gas or the like, it also comprises a nozzle body which guides this gaseous fuel so as to supply it to this injection hole, and a valve body which is housed and supported so as to be shiftable in its axial direction (the direction of gas flow) of the nozzle body, and which opens and closes the injection hole.

In this embodiment, the valve body of the injector 35 is driven by a solenoid, which is an electromagnetic drive device, and, by an excitation electrical current in pulse form, which is fed to this solenoid, going ON and OFF, it is arranged to be able to change over the opening area of the injection hole in two stages, or in many stages, or continuously (steplessly), or linearly. By the gas injection time and the gas injection timing of the injector 35 being controlled by the control signal which is outputted from the control device 4, it is possible for the flow amount and the pressure of the hydrogen gas to be controlled at high accuracy.

The injector 35 is a device of which the valve (the valve body and the valve seat) is directly driven to open and close by electromagnetic drive force. This valve is endowed with high responsiveness, since it is possible to control its drive cycle up to the high response region.

In order to supply the gas flow amount which is requested to the downstream thereof, the injector 35 varies at least one of the opening area (the opening amount) and the opening time period of the valve body which is provided in the gas flow passage of this injector 35. By doing this, the gas flow amount (or the hydrogen molar density) which is supplied to its downstream side (the side of the fuel cell 10) is adjusted.

It should be understood that, along with the gas flow amount being adjusted by the opening and closing of the valve body of the injector 35, the gas pressure which is supplied to the downstream of the injector 35 is also reduced below the gas pressure upstream of the injector 35. Due to this, the injector 35 may also be considered as a pressure regulation valve (a pressure reduction valve or a regulator).

Moreover, in this embodiment, the injector 35 could also be considered as a variable pressure adjustment valve which can vary the amount of pressure regulation (the pressure reduction amount) of the gas pressure upstream of the injector 35, so as, according to the gas demand, to correspond with the requested pressure to within a predetermined pressure range.

It should be understood that, in this embodiment, as shown in Fig. 1, the injector 35 is positioned more to the upstream side than the point A1 where the hydrogen supply flow passage 31 and the circulation flow passage 32 come together. Furthermore, as shown by the broken lines in Fig. 1, if a plurality of hydrogen tanks 30 are employed as the fuel supply source, the injector 35 should be positioned more to the downstream side than the position (the hydrogen gas point of confluence A2) where the hydrogen gas flows which are supplied from each hydrogen tanks 30 come together.

The circulation flow passage 32 connects to an exhaust flow passage 38 through a gas-liquid separator 36 and an exhaust drainage valve 37. This gas-liquid separator 36 is a device for recovering the moisture from the hydrogen OFF gas. And, by operating according to a command from the control device 4, the exhaust drainage valve 37 purges to the outside the moisture which has been recovered by the gas-liquid separator 36, and the hydrogen OFF gas, including impurities, within the circulation flow passage 32.

Furthermore, in the circulation flow passage 32, there is provided a hydrogen pump 39 which pressurizes the hydrogen OFF gas within the circulation flow passage 32 and expels it towards the side of the hydrogen supply flow passage 31. It should be understood that the hydrogen OFF gas which is exhausted via the exhaust drainage valve 37 and the exhaust flow passage 38 is diluted by a diluter 40, and flows into the oxidized OFF gas in the exhaust flow passage 23.

The control device 4 detects the amount of actuation of an acceleration actuation device (an accelerator or the like) which is provided to the vehicle, receives control information such as the requested acceleration value (for example, the requested electrical energy amount from a load device such as the traction motor 12 or the like) and the like, and controls the operation of various types of device in the system.

It should be understood that the load devices does not only refer to the traction motor 12; it is a generic term for any device which is collectively dubbed an electricity consumption device, including an auxiliary device which is required for operating the fuel cell 10 (such as, for example, the compressor. 24, the hydrogen pump 39, the motor of a cooling pump, and the like), the actuator used in various types of device which participate in the running of the vehicle (such as, for example, a transmission, a wheel control device, a steering device, a suspension device, or the like), an illumination device, and audio device, or the like.

The control device 4 comprises a computer system not shown in the figure. This computer system comprises a CPU, a ROM, a RAM, a HDD, an input and output interface, a display, and the like. Furthermore, various types of computer operation are implemented by various types of computer program which are recorded in the ROM being read in by the CPU and being executed.

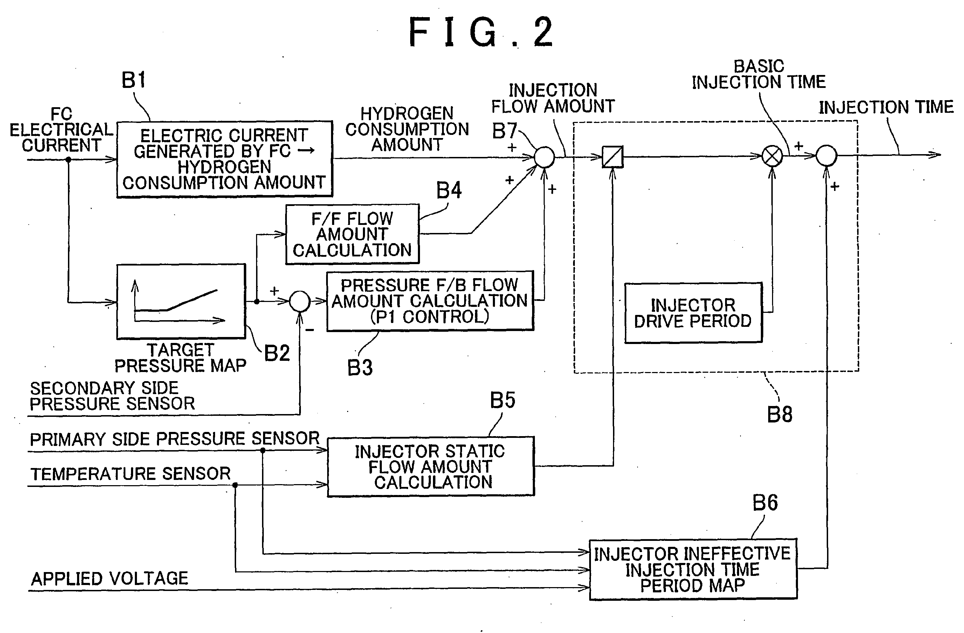

In concrete terms, as shown in Fig. 2, based on the operational state of the fuel cell 10 (i.e. on the electrical current which is being generated by the fuel cell 10, as detected by the electrical current sensor 13), the control device 4 calculates (in a fuel consumption amount calculation function: B1) the amount of hydrogen gas which is being consumed by the fuel cell 10 (hereinafter termed the "hydrogen consumption amount"). In this embodiment, this hydrogen consumption amount is calculated at each calculation cycle of the control device 4 by using a particular calculation equation which specifies the relationship between the electrical current of the fuel cell 10 and the hydrogen consumption amount.

Furthermore, based on the operational state of the fuel cell 10 (i.e. on the electrical current which is being generated by the fuel cell 10, as detected by the electrical current sensor 13), the control device 4 calculates (in a target pressure value calculation function: B2) a target pressure value for the hydrogen gas at a position downstream of the injector 35 (a target gas supply pressure for the fuel cell 10). In this embodiment, this target pressure value at the position where the secondary side pressure sensor 43 is located (the pressure adjustment position, which is the position at which pressure adjustment is requested) is calculated and updated at each calculation cycle of the control device 4, by using a particular map which specifies the relationship between the electrical current of the fuel cell 10 and the target pressure value.

Moreover, the control device 4 calculates a feedback correction flow amount (in a feedback correction flow amount calculation function: B3), based on the deviation between the target pressure value which is calculated as described above, and the detected pressure value at a position downstream of the injector 35 (the pressure adjustment position) as detected by the secondary side pressure sensor 43. This feedback correction flow amount is a hydrogen gas flow amount (a pressure difference reduction correction flow amount) added to the hydrogen consumption amount, in order to reduce the deviation between the target pressure value and the detected pressure value. In this embodiment, this feedback correction flow amount is calculated and updated at each calculation cycle of the control device 4, by using a target tracking type control rule, like PI (Proportional Integral) control or the like.

Yet further, the control device 4 calculates a feed forward correction flow amount (in a feed forward correction flow amount calculation function: B4) which corresponds to the deviation between the target pressure value which was calculated at the time before and the target pressure value which has been calculated at this time. This feed forward correction flow amount is an amount of fluctuation of the hydrogen gas flow amount originating in fluctuation of the target pressure value (a correction flow amount corresponding to the pressure difference). In this embodiment, this feed forward correction flow amount is calculated and updated at each calculation cycle of the control device 4, by using a particular calculation equation which specifies the relationship between the deviation of the target pressure value and the feed forward correction flow amount.

Even further, the control device 4 calculates a static flow amount upstream of the injector 35 (in a static flow amount calculation function: B5), based on the gas state upstream of the injector 35 (i.e. on the pressure of the hydrogen gas as detected by the primary side pressure sensor 41 and the temperature of the hydrogen gas as detected by the temperature sensor 42). In this embodiment, this static flow amount is calculated and updated at each calculation cycle of the control device 4, by using a calculation equation which specifies the relationship between the pressure and the temperature at the upstream side of the injector 35, and the static flow amount.

Still further, the control device 4 calculates an ineffective injection time of the injector 35 (in an ineffective injection time period calculation function: B6), based on the gas state upstream of the injector 35 (i.e. on the pressure and temperature of the hydrogen gas), and on the applied voltage. Here by the ineffective injection time, is meant the time period which is required, from when the injector 35 receives the control signal from the control device 4, until actual injection is initiated. In this embodiment, this ineffective injection time is calculated and updated at each calculation cycle of the control device 4, by using a map which specifies the relationship between the pressure and the temperature of the hydrogen gas on the upstream side of the injector 35 and the applied voltage, and the ineffective injection time.

Furthermore, the control device 4 calculates an injection flow amount for the injector 35 (in an injection flow amount calculation function: B7) by adding together the hydrogen consumption amount, the feedback correction flow amount, and the feed forward correction flow amount. And the control device 4, along with calculating a basic injection time for the injector 35 by multiplying a value, which is obtained by dividing the injection flow amount of the injector 35 by the static flow amount, by the drive period of the injector 35, also calculates a total injection time for the injector 35 (in a total injection time period calculation function: B8) by adding together this basic injection time and the ineffective injection time. Here, the drive period is the period of the step type waveform (the ON/OFF waveform) which specifies the opened and closed state of the injection hole of the injector 35. In this embodiment, this drive period by the control device 4 is set to a constant value.

And the control device 4 outputs a control signal for implementing the total injection time for the injector 35 which has been calculated according to the above procedure. By doing this, the gas injection time and the gas injection timing of the injector 35 are controlled, so as to adjust the flow amount and pressure of the hydrogen gas supplied to the fuel cell 10.

During normal operation of the above described fuel cell system 1, hydrogen gas from the hydrogen tank 30 is supplied via the hydrogen supply flow passage 31 to the fuel electrodes of the fuel cell 10. Furthermore, air which has been humidity regulated is supplied via the air supply flow passage 21 to the oxidant electrodes of the fuel cell 10. Electricity generation is performed by these supplies of hydrogen gas and air. At this time, the electrical power taken out from the fuel cell 10 (the requested electrical power) is calculated by the control device 4, and it is arranged for hydrogen gas and air to be supplied to the fuel cell 10 in amounts corresponding to the amount of electricity generated. In this embodiment, the pressure of the hydrogen gas which is supplied to the fuel cell 10 during this type of normal operation is controlled at high accuracy.

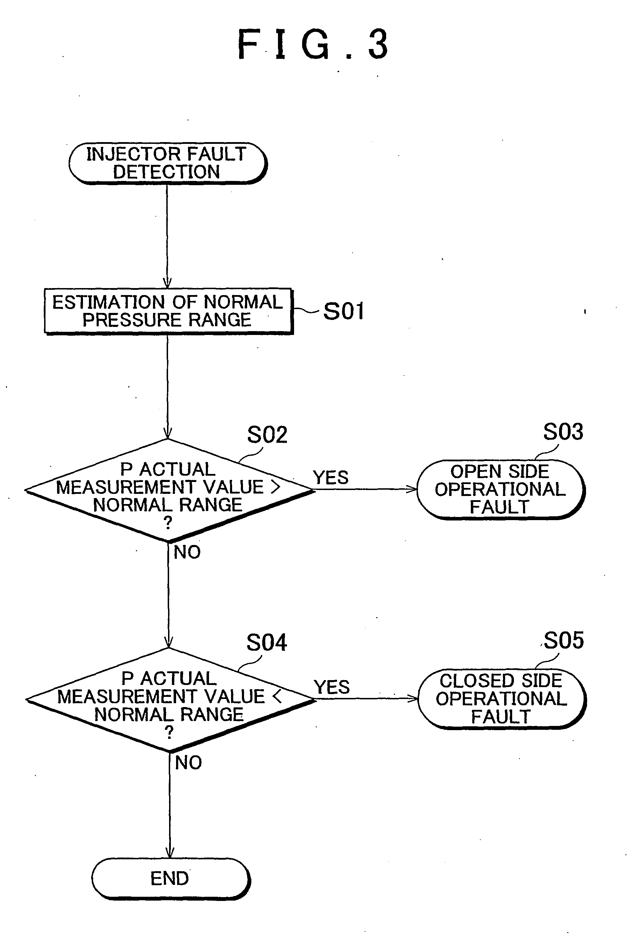

Here, in the above described fuel cell system 1, during supply of hydrogen gas to the fuel cell 10, the control device 4 performs abnormality detection processing to detect the presence or absence of an abnormality in the hydrogen gas pipework system 3 (i.e. to decide on whether or not an abnormality is present). This fault detection processing for the injector 35 in this embodiment will now be described with reference to Fig. 3.

First (in a step S01) the control device 4 makes an estimation of the normal pressure range at the secondary side, which is the downstream side of the injector 35. In this estimation of the normal pressure range, first, a target injector injection amount Q [NL/min] [sic] by the injector 35 is obtained. In concrete terms, the total injection time, as obtained by adding together the basic injection time and the ineffective injection time, is accumulated for each calculation period previously described. And the injector injection amount (target injection amount) Q [NL/min] per unit time (here, for one minute) is obtained based on this total injection time.

It should be understood that this injector injection amount Q fluctuates according to the pressure and the temperature on the primary side, which is the upstream side of the injector 35. Due to this, when obtaining the injector injection amount Q, the control device 4 adds the elements of the pressure and the temperature on the primary side, which is the upstream side of the injector 35, which are detected by the primary side pressure sensor 41 and temperature 42, to the injector injection amount Q.

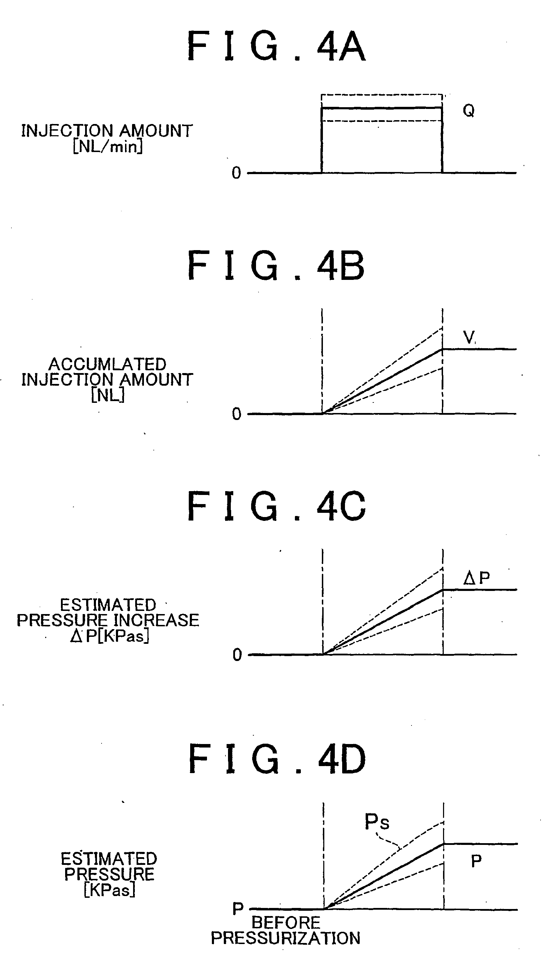

And, as shown in Fig. 4a, the control device 4 sets an upper limit value and a lower limit value for the injector injection amount Q which has been obtained, including an error as shown by the broken lines. Moreover, as shown in Fig. 4b, by accumulating this injector injection amount Q for which an upper limit value and a lower limit value have been set, the control device 4 calculates an injector injection amount accumulated value V [NL] including an upper limit and a lower limit as shown by the broken lines.

Next, along with the injector injection amount accumulated value V having the upper and lower limits, as shown in Fig. 4c, the control device 4 obtains a pressure increase ΔP having an upper limit and a lower limit shown by the broken lines. This pressure increase ΔP is estimated from a conversion equation which has been obtained in advance, using the pipework volume and temperature and the like on the secondary side, which is the downstream side of the injector 35, including the hydrogen supply flow passage 31, the interior of the fuel cell 10, and the circulation flow passage 32.

And the control device 4 fits the pressure increase ΔP having the upper and lower limits to the secondary side pressure P before pressurization. By doing this, as shown in Fig. 4d, it estimates a range Ps for the normal pressure (the estimated pressure) P having an upper limit and a lower limit, as shown by the broken lines.

Having estimated the range Ps of the normal pressure P in the above manner, the control device 4 judges (in a step S02 of Fig. 3), based on the data from the secondary side pressure sensor 43, whether or not the actual measurement value Pr of the secondary side pressure is greater than the range Ps of the normal pressure P.

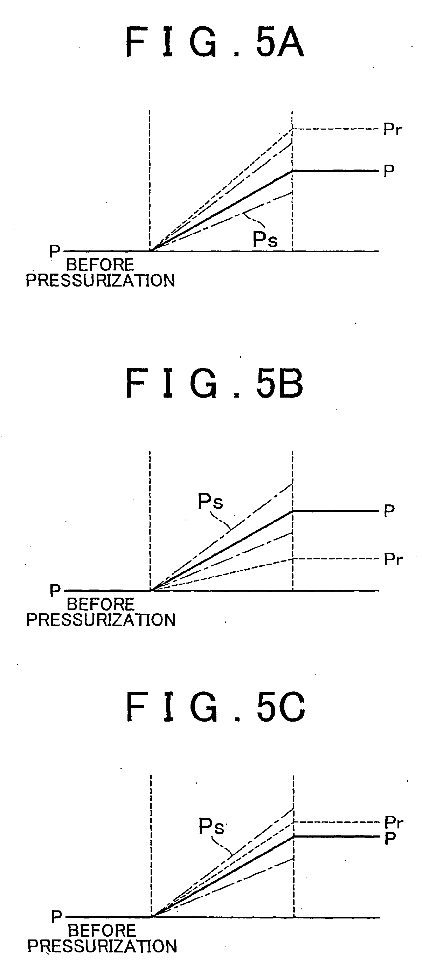

And if, as shown in Fig. 5a, as a result of this detection it has been determined that the actual measurement value Pr of the secondary side pressure is greater than the range Ps for the normal pressure P, then the control device 4 controls that an OPEN side operational fault (an open fault) is present, in which the valve of the injector 35 remains open. And, for example, an error signal is outputted, so that a notification of this effect is issued with an alarm (in a step S03 of Fig. 3).

Furthermore, if the result of the above described detection is that it has been determined that the actual measurement value Pr of the secondary side pressure is not greater than the range Ps of the normal pressure P, then the control device 4 controls (in a step S04 of Fig. 3) whether or not the actual measurement value Pr of the secondary side pressure is smaller than the range Ps of the normal pressure P.

And if, as shown in Fig. 5b, the result of the above described detection is that it has been determined that the actual measurement value Pr of the secondary side pressure is smaller than the range Ps of the normal pressure P, then the control device 4 controls that an CLOSED side operational fault (a closed fault) is present, in which the valve of the injector 35 remains closed. And, for example, an error signal is outputted, so that a notification to this effect is issued with an alarm (in a step S05 of Fig. 3).

Furthermore, as shown in Fig. 5c, if it has been determined that the actual measurement value Pr of the secondary side pressure is not smaller than the range Ps of the normal pressure P, then the control device 4 controls as a result of the above described detection (in the steps S02 and S04), that the injector 35 is in its normal state, due to the fact that the actual measurement value Pr of the secondary side pressure is within the range Ps of the normal pressure P, and the above described detections are terminated and this injector fault control processing is concluded.

With the fuel cell system 1 according to this embodiment as explained above, it is possible to set the operational state of the fuel injector 35 (i.e. its injection time) according to the operational state of the fuel cell 10 (i.e. according to its electrical current during generation of electricity). Accordingly, it is possible to change the supply pressure of the hydrogen gas in an appropriate manner according to the operational state of the fuel cell 10, and it becomes possible to enhance the responsiveness. Furthermore, since the injector 35 is employed as a flow amount adjustment valve for the hydrogen gas and also as a variable pressure adjustment valve, accordingly it becomes possible to perform pressure regulation (i.e. adjustment of the supply pressure of the hydrogen gas to the fuel cell 10) at high accuracy.

In other words, since the injector 35 receives a control signal from the control device 4, and is able to adjust the injection time and the injection timing for the hydrogen gas according to the operational state of the fuel cell 10, accordingly it is able to perform pressure adjustment more quickly and moreover more accurately than a mechanical variable pressure adjustment valve of the related art. Furthermore, since the injector 35 is compact and light in weight as compared with a mechanical variable pressure adjustment valve of the related art, and moreover is lower in price, accordingly it is possible to implement reduction in the size and in the cost of the system as a whole.

Moreover, with the fuel cell system 1 according to the embodiment explained above, the control device 4 detects the presence of an abnormality (a fault) in the injector 35, as an abnormality in the hydrogen gas pipework system 3, from the range Ps of the estimated normal pressure P which is deduced from the injector injection amount Q which is the target injection amount for the injector 35, and the actual measurement pressure P in the hydrogen gas pipework system 3. Due to this, it is possible rapidly to perform fault detection for the injector 35 which is located in the hydrogen gas pipework system 3, even during generation of electricity by the fuel cell 10.

In other words, if such an injector 35 is employed, then, as compared to the case of employing a mechanical regulator according to the related art as a pressure reduction (pressure regulation) unit which is disposed in the hydrogen pipework system 3, it is possible to ascertain the injection amount (or the injection time) for the injector 35 as described above. Due to this, when controlling the presence or absence of an abnormality, it is not necessary to wait until the gas pressure in the hydrogen gas pipework system 3 stabilizes, as the case with a pressure descent method or the like according to the related art, so that it is possible to diagnose whether or not an abnormality is present in a short time period, during the time period that it takes for the gas pressure in the hydrogen pipework system 3 to stabilize.

In particular, the control device 4 can detect an abnormality due to an operational fault in the injector 35 of the hydrogen gas pipework system 3, such as an open fault, a closed fault, or the like, in a short time period while the fuel cell 10 is generating electricity. Due to this, it is possible to deal with this abnormality in a rapid manner, and to maintain a satisfactory state of generation of electricity by the fuel cell 10.

Furthermore, the secondary side pressure sensor 43 is provided in the hydrogen gas pipework system 3 at the downstream side of the injector 35. Due to this, by actually measuring the pressure on the downstream side of the injector 35, and based on the detection result from this secondary side pressure sensor 43, it is possible the detect presence of an abnormality in the hydrogen gas pipework system 3 (in this embodiment, on an abnormality of the injector 35) in a more accurate manner, from the actual measurement value of this pressure, and from the target injection amount of the injector 35.

In the abnormality detection processing by the control device 4 of the fuel cell system 1 described above, it would also be possible to provide a correction function which corrects (sets) the target injection amount for the injector 35, based on the deviation between an estimated pressure which is obtained from the target injection amount for the injector 35, and the detected pressure in the hydrogen gas pipework system 3.

If this type of correction function is provided, it is still possible to perform abnormality detection for the hydrogen gas pipework system 3 with better accuracy, irrespective of individual differences between injectors 35 or secondary side pressure sensors 43 or the like, and of changes thereof over time.

Next, the case of detection of a gas leak in the above described fuel cell system 1, in particular in the hydrogen gas pipework system 3, will be explained.

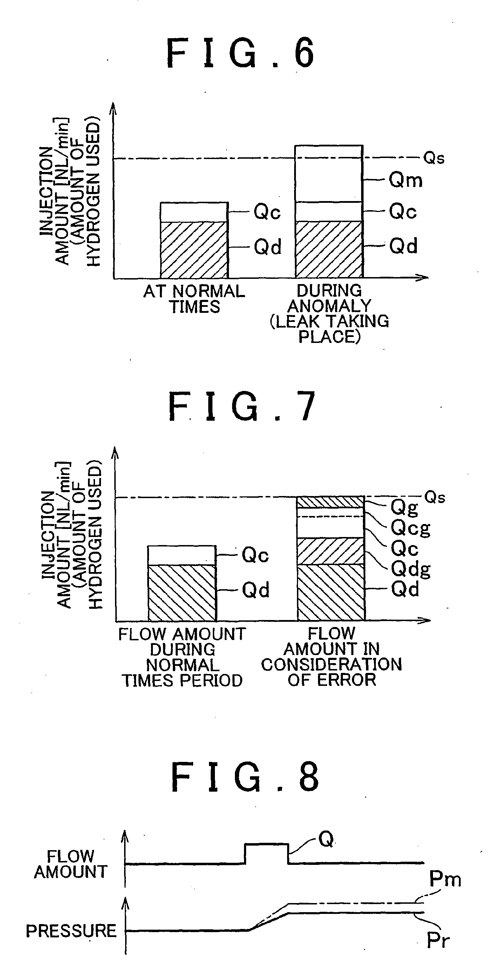

The injection amount Q of hydrogen gas from the primary side to the secondary side of the injector 35 is the flow amount of hydrogen gas which is consumed by the fuel cell 10, and, as shown in Fig. 6, at normal times, this gas consumption amount may be determined from the electrical current consumption amount Qd for the fuel cell 10, and a cross leakage amount Qc which leaks to the oxidant electrode side through an MEA (Membrane Electrode Assembly) which has an electrolyte membrane.

By contrast, when an abnormality such as a gas leak or the like occurs in the secondary side of the hydrogen gas pipework system 3 which is its side downstream of the injector 35, as shown in Fig. 6, the injector injection amount Q increases by just the gas leakage amount Qm. Accordingly, the control device 4 monitors this injector injection amount Q, and detects that there is no gas leakage abnormality in the hydrogen gas pipework system 3, if the injector injection amount Q is less than or equal to a predetermined threshold value Qs.

On the other hand, if the injector injection amount Q is greater than the predetermined threshold value Qs, then it is detected that a gas leakage abnormality in the hydrogen gas pipework system 3 is present. If this is the case, for example, an error signal may be outputted and notification to that effect may be given via an alarm. By doing this, it is absolutely possible to detect any abnormality when a gas leak has occurred of greater than or equal to a flow amount which is obtained by subtracting the minimum injection amount at normal times from the maximum flow amount of the threshold value Qs.

The injector injection amount Q fluctuates more or less along with the error in the injection command amount for the injector 35 (the target injection amount), along with the error in the electrical current sensor 13, and along with increase of the cross leakage which accompanies deterioration of the MEA. Accordingly, when setting the threshold value Qs of the injector injection amount Q to detect that a gas leak is present, as shown in Fig. 7, consideration is given to the error Qg in the injection command amount for the injector 35, and to the detection error Qdg in the electrical current sensor 13 and to the increase amount Qcg of cross leakage which accompanies deterioration of the MEA.

In this manner, with the fuel cell system 1 according to the embodiment described above, since the presence of a gas leak abnormality in the hydrogen gas pipework system 3 is judged from the difference between the target injection amount for the injector 35 and the gas consumption amount by the hydrogen gas pipework system 3, accordingly the control device 4 is able rapidly to perform abnormality detection processing for the hydrogen gas pipework system at the same time as pressurization processing, even during generation of electricity by the fuel cell 10, and it is accordingly possible to shorten the time period which is required for gas leak detection.

Due to this, it is possible to detect an abnormality due to gas leakage in the hydrogen gas pipework system 3 during generation of electricity by the fuel cell 10 in a short time period, and it is possible to deal with this abnormality rapidly and to maintain a satisfactory state of generation of electricity by the fuel cell 10.

Next, an example of yet another method for detecting a gas leak in the hydrogen gas pipework system 3 of the fuel system 1 will be explained.

Here, first, as shown in Fig. 8, an anticipated pressure increase value Pm on the secondary side is obtained from the injection amount Q of hydrogen gas from the primary side to the secondary side by the injector 35. Next, the actual measurement pressure increase value Pr on the secondary side, which is obtained from the secondary side pressure sensor 43 when hydrogen gas is actually injected by the injector 35 to the secondary side of the hydrogen gas pipework system 3, and the anticipated pressure increase value Pm which has been obtained in advance, are compared together.

And, if this actual measurement pressure increase value Pr has fallen below the anticipated pressure increase value Pm by less than or equal to a predetermined value, then it is detected that there is a gas leakage in the hydrogen gas pipework system 3. And, along with this detection, for example, an error signal may be outputted and notification to that effect may be given via an alarm. Furthermore, during normal operation of the fuel cell system 1, the value of the injector injection amount when no gas leakage is present may be always learned and corrected, the deviation of this injection amount may be calculated, the range of this deviation may be taken as a detection range, and the presence of a gas leakage may be detected based on this detection range.

In this case, the control device 4 detects hat a gas leak is present in the hydrogen gas pipework system, if the injector injection amount has fallen below the detection range which has been obtained. And, for example, an error signal may be outputted and notification to that effect may be given via an alarm. By doing this, it is possible to perform abnormality detection for the hydrogen gas pipework system 3 rapidly and with better accuracy, at the same time as performing pressurization processing, even during generation of electricity by the fuel cell 10, and it is thus possible to shorten the time period which is required for gas leakage detection.

Moreover, during intermittent operation of the fuel cell system 1 at predetermined intervals, it would also be acceptable always to calculate and to correct the cross leakage amount in the MEA, to calculate a pressure descent amount according to this cross leakage, and to detect the presence of a gas leak based on this pressure descent amount. In this case, the control device 4 detects the presence of a gas leak in the hydrogen gas pipework system 3 if the pressure descent exceeds the pressure descent amount due to cross leakage. And, for example, an error signal may be outputted and notification to that effect may be given via an alarm.

In the case described above as well, it is possible to perform abnormality detection for the hydrogen gas pipework system 3 rapidly and with better accuracy, at the same time as performing pressurization processing, even during generation of electricity by the fuel cell 10, and it is thus possible to shorten the time period which is required for gas leakage detection.

In the above gas leakage detection processing, it would also be acceptable to arrange to perform more accurate gas leak detection, by increasing the pressure at the secondary side of the injector 35 so as to enhance the sensitivity of the gas leakage detection.

It should be understood that it is a matter of course for the abnormality detection in the embodiment described above to be performed, not only during pressurization of the hydrogen gas pipework system 3 as during initial starting operation, but also during pressurization of the hydrogen gas pipework system 3 during intermittent operation which is performed during normal operation. Furthermore, it is not limited to the hydrogen gas pipework system 3; for example, it could also be applied to the oxidant gas pipework system 2.

Here by intermittent operation is meant an operating mode in which, during low load operation, such as, for example, during idling, or during slow speed running, or during regenerative braking or the like, the generation of electricity by the fuel cell 10 is temporarily stopped, and electrical power supply is performed from an electrical accumulation means such as a battery or a capacitor or the like to the load (the vehicle motor and various types of auxiliary machinery and the like)

Although, in the above described embodiment, an example was shown in which the secondary side pressure sensor 43 was disposed at a position (the pressure adjustment position: the position at which adjustment of pressure is required) which was downstream of the injector 35 in the hydrogen supply flow passage 31 of the hydrogen gas pipework system 3, it would also be acceptable, for example, to position the secondary side pressure sensor in the neighborhood of the hydrogen gas inlet of the fuel cell 10 (on the hydrogen supply flow passage 31), or in the neighborhood of the hydrogen gas outlet of the fuel cell 10 (on the circulation flow passage 32), or in the neighborhood of the hydrogen gas outlet of the hydrogen pump 39 (on the circulation flow passage 32). Furthermore, it would also be acceptable to arrange to position it on the upstream side of the injector 35.

In the embodiment described above, an example was shown of abnormality detection based on the target injection amount for the injector 35 and the detected pressure in the hydrogen gas pipework system 3, but it would also be acceptable to employ, as the target operational amount for the injector 35, instead of the target injection amount, a target valve opening amount, a target valve opening time, a target pressure, a target flow amount, or a target injection time; or, furthermore, it would also be acceptable to employ, as the detected physical quantity of the hydrogen gas pipework system 3, instead of the detected pressure, a detected temperature, a detected flow amount or an amount of change of these.

Although, in the embodiment described above, an example was shown in which the fuel cell system was mounted to a fuel cell vehicle, it would also be possible to mount this fuel cell system to various types of moving object other than a fuel cell vehicle (such as a robot, a ship, an aircraft or the like). Furthermore, it would also be acceptable to arrange to apply this fuel cell system to an electricity generation system for stationary use, which is used as a facility for electricity generation in a building (a house or business premises or the like).

## Claims

1. A fuel cell system comprising:
a fuel cell (10),
an injector (35) which is provided in a gas supply system (3) for supplying reaction gas to the fuel cell (10) and which adjusts a state of the reaction gas at the upstream side of the gas supply system (3) and supplies the adjusted reaction gas to the downstream side of the gas supply system (3), and
control means (4) for controlling the injector (35) according to an operational state of the fuel cell (10), wherein:
the control means (4) is adapted to detect, during operation of the fuel cell, a presence of an abnormality in the gas supply system (3), based on a target operational amount for the injector (35), and a physical quantity detected within the gas supply system (3).

2. The fuel cell system according to claim 1, further comprising:
pressure detection means for detecting a pressure within the gas supply system (3), wherein
the control means(4) detects the presence of the abnormality in the gas supply system (3), based on a target injection amount for the injector (35), and the detected pressure within the gas supply system (3).

3. The fuel cell system according to claim 1 or 2, wherein
the control means (4) corrects the target injection amount, based on a difference between an estimated pressure obtained from the target injection amount, and the detected pressure within the gas supply system (3).

4. The fuel cell system according to any one of claims 1 to 3, wherein
the gas supply system (3) is a hydrogen gas supply system which supplies hydrogen to the fuel cell (10).

5. The fuel cell system according to any one of claims 1 to 4, wherein
the control means (4) detects the presence of the abnormality of the injector (35), by whether an actual measurement value of the pressure which is detected at the downstream side of the injector (35) is within a normal pressure range for the reaction gas by the injector (35).

6. The fuel cell system according to any one of claims 1 to 5, wherein
the control means (4) detects the presence of the abnormality of the gas supply system (3), based on a difference between gas consumption amount in the gas supply system (3) and actual injection amount by the injector (35).

7. The fuel cell system according to claim 6, wherein
the gas consumption amount includes at least one of an error in injection command amount to the injector (35), an error in a detection of an electrical current generated by the fuel cell (10), and an increasing amount for the cross leakage of the fuel cell (10); and
the control means (4) detects the presence of a gas leak, based on the gas consumption amount and the actual injection amount of the reaction gas by the injector (35).

8. The fuel cell system according to claim 4, wherein
the control means (4) detects the presence of the abnormality in the hydrogen gas supply system (3).

9. A moving object comprising:
the fuel cell system according to any one of claims 1 to 8.

10. Abnormality determination method for a fuel cell (10) comprised in a fuel cell system, the fuel cell system further including an injector (35) and control means (4) for controlling said injector (35), wherein said injector (35) is provided in a gas supply system (3) for supplying reaction gas to the fuel cell (10), said injector (35) is controlled to adjust a state of the reaction gas at the upstream side of the gas supply system (3) and to supply the adjusted reaction gas to the downstream side of the gas supply system (3) according to an operational state of the fuel cell (10),
the method being **characterized by** comprising the steps of:
calculating a target operational amount for the injector (35);
detecting a physical quantity within the gas supply system (3); and
detecting a presence of an abnormality in the gas supply system (3), based on the target operational amount and the physical quantity.

## Patentansprüche

1. Brennstoffzellensystem, aufweisend:
eine Brennstoffzelle (10),
eine Einspritzdüse (35), die in einem Gaszuführsystem (3) zum Zuführen eines Reaktionsgases zu der Brennstoffzelle (10) angeordnet ist, und die einen Zustand des Reaktionsgases auf der stromaufwärtigen Seite des Gaszuführsystems (3) anpasst und das angepasste Reaktionsgas der stromabwärtigen Seite des Gaszuführsystems (3) zuführt, und
eine Steuerungseinrichtung (4) zum Steuern der Einspritzdüse (35) gemäß einem Betriebszustand der Brennstoffzelle (10), wobei
die Steuerungseinrichtung (4) in der Lage ist, während eines Betriebs der Brennstoffzelle, ein Vorhandensein einer Anomalität in dem Gaszuführsystem (3), basierend auf einer Soll-Betriebsmenge für die Einspritzdüse (35) und einer physikalischen Größe, die innerhalb des Gaszuführsystems (3) erfasst wird, zu erfassen.

2. Brennstoffzellensystem nach Anspruch 1, ferner aufweisend:
eine Druckerfassungseinrichtung zum Erfassen eines Drucks innerhalb des Gaszuführsystems (3), wobei
die Steuerungseinrichtung (4) das Vorhandensein der Anomalität in dem Gaszuführsystem (3) basierend auf einer Soll-Einspritzmenge für die Einspritzdüse (35), und dem erfassten Druck innerhalb des Gaszuführsystems (3) erfasst.

3. Brennstoffzellensystem nach Anspruch 1 oder 2, wobei
die Steuerungseinrichtung (4) die Soll-Einspritzmenge basierend auf einer Differenz zwischen einem geschätzten Druck, der anhand der Soll-Einspritzmenge erhalten wird, und dem erfassten Druck innerhalb des Gaszuführsystems (3) korrigiert.

4. Brennstoffzellensystem nach einem der Ansprüche 1 bis 3, wobei
es sich bei dem Gaszuführsystem (3) um ein Wasserstoffgaszuführsystem handelt, das der Brennstoffzelle (10) Wasserstoff zuführt.

5. Brennstoffzellensystem nach einem der Ansprüche 1 bis 4, wobei
die Steuerungseinrichtung (4) das Vorhandensein der Anomalität der Einspritzdüse (35) **dadurch** erfasst, ob ein tatsächlicher Messwert des Drucks, der an der stromabwärtigen Seite der Einspritzdüse (35) erfasst wird, sich innerhalb eines normalen Druckbereichs für das Reaktionsgas durch die Einspritzdüse (35) befindet.

6. Brennstoffzellensystem nach einem der Ansprüche 1 bis 5, wobei
die Steuerungseinrichtung (4) das Vorhandensein der Anomalität des Gaszuführsystems (3) basierend auf einer Differenz zwischen einer Gasverbrauchsmenge in dem Gaszuführsystem (3) und einer tatsächlichen Einspritzmenge durch die Einspritzdüse (35) erfasst.

7. Brennstoffzellensystem nach Anspruch 6, wobei
die Gasverbrauchsmenge zumindest einen Fehler in einer Einspritzbefehlsmenge für die Einspritzdüse (35), einen Fehler in einer Erfassung eines elektrischen Stroms, der durch die Brennstoffzelle (10) erzeugt wird, und/oder eine zunehmende Menge in Bezug auf die Undichtigkeit der Brennstoffzelle (10) beinhaltet; und
die Steuerungseinrichtung (4) das Vorhandensein eines Gasaustritts basierend auf der Gasverbrauchsmenge und der tatsächlichen Einspritzmenge des Reaktionsgases durch die Einspritzdüse (35) erfasst.

8. Brennstoffzellensystem nach Anspruch 4, wobei
die Steuerungseinrichtung (4) das Vorhandensein der Anomalität in dem Wasserstoffgas-Zuführsystem (3) erfasst.

9. Bewegliches Objekt, aufweisend:
das Brennstoffzellensystem nach einem der Ansprüche 1 bis 8.

10. Anomalitätsbestimmungsverfahren für eine Brennstoffzelle (10), die in einem Brennstoffzellensystem enthalten ist, wobei das Brennstoffzellensystem ferner eine Einspritzdüse (35) und eine Steuerungseinrichtung (4) zum Steuern der Einspritzdüse (35) beinhaltet, wobei die Einspritzdüse (35) in einem Gaszuführsystem (3) zum Zuführen von Reaktionsgas an die Brennstoffzelle (10) vorgesehen ist, wobei die Einspritzdüse (35) so gesteuert wird, dass ein Zustand des Reaktionsgases auf der stromaufwärtigen Seite des Gaszuführsystems (3) angepasst wird und das angepasste Reaktionsgas der stromabwärtigen Seite des Gaszuführsystems (3) gemäß einem Betriebszustand der Brennstoffzelle (10) zugeführt wird,
wobei das Verfahren **dadurch gekennzeichnet ist, dass** es folgende Schritte beinhaltet:
Berechnen einer Soll-Betriebsmenge für die Einspritzdüse (35);
Erfassen einer physikalischen Größe innerhalb des Gaszuführsystems (3); und
Erfassen eines Vorhandenseins einer Anomalität in dem Gaszuführsystem (3), basierend auf der Soll-Betriebsmenge und der physikalischen Größe.

## Revendications

1. Système de pile à combustible comprenant :
une pile à combustible (10) ;
un injecteur (35) qui est disposé dans un système (3) de délivrance de gaz destiné à délivrer du gaz de réaction à la pile à combustible (10) et qui ajuste l'état du gaz de réaction du côté amont du système (3) de délivrance de gaz et qui délivre le gaz de réaction ajusté au côté aval du système (3) de délivrance de gaz ; et
un moyen (4) de commande destiné à commander l'injecteur (35) d'après un état de fonctionnement de la pile à combustible (10),
dans lequel le moyen (4) de commande est apte à détecter, en fonctionnement de la pile à combustible, la présence d'une anomalie dans le système (3) de délivrance de gaz, en se basant sur une valeur de fonctionnement cible pour l'injecteur (35) et sur une quantité physique détectée à l'intérieur du système (3) de délivrance de gaz.

2. Système de pile à combustible selon la revendication 1, comprenant en outre :
un moyen de détection de pression destiné à détecter une pression à l'intérieur du système (3) de délivrance de gaz,
dans lequel le moyen (4) de commande détecte la présence de l'anomalie dans le système (3) de délivrance de gaz, en se basant sur une valeur d'injection cible pour l'injecteur (35) et sur la pression détectée à l'intérieur du système (3) de délivrance de gaz.

3. Système de pile à combustible selon la revendication 1 ou 2, dans lequel le moyen (4) de commande corrige la valeur d'injection cible, en se basant sur la différence entre une pression estimée obtenue à partir de la valeur d'injection cible et la pression détectée à l'intérieur du système (3) de délivrance de gaz.

4. Système de pile à combustible selon l'une quelconque des revendications 1 à 3, dans lequel le système (3) de délivrance de gaz est un
système de délivrance d'hydrogène gazeux qui délivre de l'hydrogène à la pile à combustible (10).

5. Système de pile à combustible selon l'une quelconque des revendications 1 à 4, dans lequel le moyen (4) de commande détecte la présence de l'anomalie de l'injecteur (35), par le fait qu'une valeur réelle de mesure de la pression qui est détectée du côté aval de l'injecteur (35) est ou non à l'intérieur d'une plage de pressions normales pour le gaz de réaction par l'injecteur (35).

6. Système de pile à combustible selon l'une quelconque des revendications 1 à 5, dans lequel le moyen (4) de commande détecte la présence de l'anomalie du système (3) de délivrance de gaz en se basant sur la différence entre la valeur de consommation de gaz dans le système (3) de délivrance de gaz et la valeur réelle d'injection par l'injecteur (35).

7. Système de pile à combustible selon la revendication 6,
dans lequel la valeur de consommation de gaz inclut au moins l'une d'une erreur dans la valeur de consigne d'injection à l'injecteur (35), d'une erreur dans la détection d'un courant électrique engendré par la pile à combustible (10), et d'une valeur accrue en raison de la fuite interne de la pile à combustible (10), et
dans lequel le moyen (4) de commande détecte la présence d'une fuite de gaz, en se basant sur la valeur de consommation de gaz et sur la valeur réelle d'injection du gaz de réaction par l'injecteur (35).

8. Système de pile à combustible selon la revendication 4, dans lequel le moyen (4) de commande détecte la présence de l'anomalie dans le système (3) de délivrance d'hydrogène gazeux.

9. Objet mobile comprenant le système de pile à combustible selon l'une quelconque des revendications 1 à 8.

10. Procédé de détermination d'anomalie pour une pile à combustible (10) comprise dans un système de pile à combustible, le système de pile à combustible incluant en outre un injecteur (35) et un moyen (4) de commande destiné à commander ledit injecteur (35), dans lequel ledit injecteur (35) est disposé dans un système (3) de délivrance de gaz destiné à délivrer du gaz de réaction à la pile à combustible (10), ledit injecteur (35) étant commandé pour
ajuster l'état du gaz de réaction du côté amont du système (3) de délivrance de gaz et pour délivrer le gaz de réaction ajusté au côté aval du système (3) de délivrance de gaz d'après un état de fonctionnement de la pile à combustible (10),
le procédé étant **caractérisé en ce qu'**il comprend les étapes :
de calcul d'une valeur de fonctionnement cible pour l'injecteur (35) ;
de détection d'une quantité physique à l'intérieur du système (3) de délivrance de gaz ; et
de détection de la présence d'une anomalie dans le système (3) de délivrance de gaz en se basant sur la valeur de fonctionnement cible et sur la quantité physique.
